(19) Europäisches Patentamt
European Patent Office
Office européen des brevets

(11) **EP 3 724 725 B1**

(12) **FASCICULE DE BREVET EUROPEEN**

(45) Date de publication et mention
de la délivrance du brevet:
**08.06.2022 Bulletin 2022/23**

(21) Numéro de dépôt: **18826092.1**

(22) Date de dépôt: **27.11.2018**

(51) Classification Internationale des Brevets (IPC):
*G03H 1/08* *(2006.01)*   *G03H 1/00* *(2006.01)*
*G03H 1/04* *(2006.01)*   *G03H 1/26* *(2006.01)*
*G01N 15/02* *(2006.01)*   *G01N 15/14* *(2006.01)*

(52) Classification Coopérative des Brevets (CPC):
**G03H 1/0443; G01N 15/1468; G03H 1/0866;**
G01N 2015/1452; G01N 2015/1454;
G03H 2001/0033; G03H 2001/005;
G03H 2001/0447; G03H 2001/0452;
G03H 2001/0883; G03H 2001/2655; G03H 2222/45;
G03H 2227/03

(86) Numéro de dépôt international:
**PCT/FR2018/052990**

(87) Numéro de publication internationale:
**WO 2019/115901 (20.06.2019 Gazette 2019/25)**

(54) **PROCEDE DE CALIBRATION D'UN DISPOSITIF D'ANALYSE ET DISPOSITIF ASSOCIE**

VERFAHREN ZUR KALIBRIERUNG EINER ANALYSEVORRICHTUNG UND ZUGEHÖRIGE VORRICHTUNG

METHOD FOR CALIBRATING AN ANALYSIS DEVICE, AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2017 FR 1762265**

(43) Date de publication de la demande:
**21.10.2020 Bulletin 2020/43**

(73) Titulaires:
• **BIOMERIEUX**
**69280 Marcy-L'Etoile (FR)**
• **Commissariat à l'Energie Atomique et aux Energies Alternatives**
**75015 Paris (FR)**

(72) Inventeurs:
• **DOUET, Alice**
**16320 Villebois-Lavalette (FR)**
• **JOSSO, Quentin**
**69007 Lyon (FR)**

(74) Mandataire: **Cabinet Laurent & Charras**
**Le Contemporain**
**50 Chemin de la Bruyère**
**69574 Dardilly Cedex (FR)**

(56) Documents cités:
**WO-A1-2016/075279**

• **LAURENCE WILSON ET AL: "3D Localization of weak scatterers in digital holographic microscopy using Rayleigh-Sommerfeld back-propagation", OPTICS EXPRESS, VOL. 16, NO. 7, PP. 4479-4486 (2008), vol. 20, no. 15, 16 juillet 2012 (2012-07-16), page 16735, XP055208454, ISSN: 2161-2072, DOI: 10.1364/OE.20.016735**
• **DOUET ALICE ET AL: "Fast Raman single bacteria identification: toward a routine in-vitro diagnostic", PROCEEDINGS OF SPIE, SPIE, 1000 20TH ST. BELLINGHAM WA 98225-6705 USA, vol. 9887, 27 avril 2016 (2016-04-27), pages 98871W-98871W, XP060069255, ISSN: 0277-786X, DOI: 10.1117/12.2227658 ISBN: 978-1-5106-1533-5**

- **YONG-SEOK CHOI ET AL: "Three-dimensional volumetric measurement of red blood cell motion using digital holographic microscopy", APPLIED OPTICS, OPTICAL SOCIETY OF AMERICA, WASHINGTON, DC; US, vol. 48, no. 16, 1 juin 2009 (2009-06-01), pages 2983-2990, XP001524402, ISSN: 0003-6935, DOI: 10.1364/AO.48.002983**
- **PATRIK LANGEHANENBERG ET AL: "Automated three-dimensional tracking of living cells by digital holographic microscopy", JOURNAL OF BIOMEDICAL OPTICS, vol. 14, no. 1, 1 janvier 2009 (2009-01-01), page 014018, XP055043026, ISSN: 1083-3668, DOI: 10.1117/1.3080133**

**Description**

DOMAINE TECHNIQUE

La présente invention concerne le domaine de l'analyse optique de particules biologiques. Les particules biologiques peuvent être des microorganismes tels que des bactéries, des champignons ou des levures par exemple. Il peut également s'agir de cellules, organismes multicellulaires, ou toute autre particule de type particule polluante, poussière.

L'invention trouve une application particulièrement avantageuse pour positionner un système optique sur une particule biologique d'intérêt afin d'améliorer les mesures des caractéristiques physiologiques de la particule biologique, par exemple à l'aide de la spectroscopie Raman.

ART ANTERIEUR

La spectroscopie Raman est une méthode non destructive de détermination des caractéristiques physiologiques d'une particule biologique. Cette méthode exploite le phénomène physique selon lequel un milieu modifie légèrement la fréquence de la lumière circulant dans le milieu. Cette modification de la fréquence de la lumière correspond à un échange d'énergie entre le rayon lumineux et le milieu, et donne des informations sur la particule biologique présente dans le milieu. La spectroscopie Raman consiste à envoyer une lumière monochromatique, par exemple un faisceau laser, sur la particule biologique et à analyser la lumière diffusée.

Le document WO 2016/075279 décrit un procédé d'analyse d'un échantillon contenant des particules biologiques au moyen d'un système d'imagerie mettant en œuvre une spectroscopie Raman. Un ensemble de détection recherche la position d'une particule biologique dans un milieu. Lorsqu'une particule est sélectionnée, l'échantillon et/ou l'ensemble de détection est déplacé de sorte que le faisceau laser soit focalisé sur la particule biologique. Langehanenberg et al. traitent dans "Automated three-dimensional tracking of living cells by digital holographie microscopy" (Journal of Biomédical Optics, vol.14(1), 2009) d'un dispositif de microscopie holoraphique digitale pour imager et quantifier, au cours du temps, des cellules vivantes dans un échantillon sans mise au point mécanique. Wilson et al. traitent dans "3D Localization of weak scatterers in digital holographie microscopy using Rayleigh-Sommerfeld back-propagation" (Optics Express, Vol.20, No.15 (2012)) de microscopie holographique digitale pour imager et quantifier au cours du temps le déplacement en 3D de particules.

Pour connaître la consigne de déplacement à appliquer à l'échantillon et/ou à l'ensemble de détection par rapport au faisceau laser, un modèle de correspondance entre positions numériques et positions réelles est utilisé de sorte à faire la correspondance entre la position mesurée du pixel central de la particule dans l'image et les déplacements réels à accomplir.

Lorsque le déplacement est effectué, un ensemble d'analyse réalise un tir laser sur la particule et capture la lumière ayant interagi avec la particule de sorte à déterminer au moins une caractéristique de la particule.

Un ensemble d'incertitudes, de défauts de construction ou de défauts liés aux tolérances des différentes pièces mécaniques et optiques peuvent conduire à une grande imprécision du déplacement à effectuer pour positionner correctement la particule par rapport à l'ensemble d'analyse. En effet, un mode d'analyse fin, tel que la micro-spectroscopie Raman confocale adaptée à la mesure sur cellule individuelle, impose de positionner un objet d'une taille inférieure à $1\,\mu m^3$, le volume confocal, avec un objet dont la dimension caractéristique est également de l'ordre du $\mu m^3$.

Le problème technique objectif de la présente invention est, par conséquent, d'améliorer la précision du déplacement de l'échantillon et/ou de l'ensemble de détection de sorte à améliorer l'analyse d'une particule biologique présente dans un échantillon.

EXPOSE DE L'INVENTION

Pour résoudre le problème technique, l'invention propose de calibrer le modèle de correspondance entre positions numériques et positions réelles en observant l'influence de plusieurs consignes de déplacement sur la position d'au moins un élément sur l'image issue de l'ensemble de détection. Pour ce faire, l'invention utilise un ensemble de détection, très rapide, intégrant une simple acquisition sans focalisation précise, associée à une reconstruction numérique de la focalisation comportant au moins une focalisation numérique destinée à détecter un élément présent dans l'échantillon et obtenir rapidement une position dudit élément.

A cet effet, l'invention concerne un procédé de calibration d'un dispositif d'analyse d'au moins un élément présent dans un échantillon, ledit dispositif comportant :

- un ensemble de détection comportant une source lumineuse configurée pour illuminer ledit échantillon, un système optique configuré pour collecter le rayonnement lumineux en provenance dudit échantillon, et un capteur d'image plan configuré de sorte à acquérir une image holographique formée par l'interférence entre une onde de référence issue de ladite source lumineuse et une onde diffractée par ledit rayonnement provenant de l'échantillon ; et

- des moyens de traitement numériques configurés pour détecter une position numérique d'au moins un élément dans ledit échantillon à partir de ladite image holographique acquise, et pour calculer une position réelle dudit élément en fonction de ladite position numérique et d'un modèle de correspondance entre positions numériques et positions réelles.

L'invention est caractérisée en ce que ledit procédé de calibration comporte la mise en œuvre de plusieurs déplacements prédéterminés dudit échantillon relativement audit système optique, et, pour chacun desdits déplacements, la détection d'une position numérique d'un même élément de sorte à déterminer ledit modèle de correspondance entre positions numériques et positions réelles en fonction des déplacements prédéterminés et des positions numériques dudit élément après chaque déplacement, ladite détection comportant les étapes suivantes :

- acquisition d'une image ;
- construction numérique d'une série de matrices électromagnétiques modélisant, par propagation numérique de ladite image holographique acquise, l'onde électromagnétique dans des plans parallèles au plan du capteur d'image et compris dans ledit échantillon pour une pluralité d'écarts par rapport audit plan ;
- à partir de la série de matrices électromagnétiques, détermination d'une matrice de mise au point moyenne pour ledit échantillon et détermination de la matrice électromagnétique correspondante *Ifmoy ;*
- identification dudit même élément dans la première matrice électromagnétique correspondante *Ifmoy* ; et
- détermination de ladite position numérique dudit même élément dans ladite matrice électromagnétique *Ifmoy.*

L'invention permet ainsi de compenser, d'une manière générale, les défauts optiques de l'ensemble de détection et les défauts mécaniques résultant du déplacement entre l'échantillon et/ou de l'ensemble de détection.

Le système optique de l'ensemble de détection peut avantageusement être réutilisé pour réaliser une analyse micro-spectroscopique Raman car le défaut de positionnement entre l'axe optique du système optique et l'axe normal de l'échantillon est compensé par l'utilisation du modèle de correspondance calibré selon l'invention.

Pour pouvoir déterminer ce modèle de correspondance rapidement, la mise au point est effectuée de manière numérique à partir d'une image défocalisée associée à une reconstruction numérique de la focalisation. Ainsi, la position numérique de l'élément est déterminée à partir de l'image focalisée numériquement. Il s'ensuit que les instruments de mesure sont simplifiés car il n'est pas nécessaire d'utiliser des appareils de mise au point extrêmement précis pour mettre au point une image de l'ordre de la centaine de nanomètres.

Le modèle de correspondance de l'invention permet ainsi de détecter rapidement et avec une grande précision la position réelle d'une particule à partir d'une position numérique d'une particule d'une image. Ce modèle de correspondance peut ensuite être utilisé pour calculer le déplacement de l'échantillon relativement au système d'analyse, et ainsi focaliser précisément un tir laser sur une particule dont la position dans l'image est connue. La différence de positionnement entre l'utilisation d'une échelle de transformation et la matrice de l'invention est réduite mais elle suffit à améliorer grandement les performances d'une spectroscopie Raman par exemple.

Pour un exemple typique, un faisceau laser est focalisé sur les coordonnées (0, 0, 0) d'un espace numérique tridimensionnel. Une particule d'intérêt est détectée aux coordonnées pixel (550, 0, 0). En utilisant une échelle de transformation liées aux caractéristiques théoriques des divers éléments composant le système, les déplacements de l'échantillon peuvent correspond aux coordonnées (39.71, 0, 0) en micromètres. Avec l'invention et la calibration du modèle de correspondance, les déplacements de l'échantillon correspondent aux coordonnées (39.61, -0.23, 0.18) en micromètres.

Il s'ensuit que l'invention permet d'obtenir la précision de positionnement importante requise par ce type d'application, tout en s'affranchissant de contraintes trop fortes ou trop coûteuses sur la conception de l'instrument.

Selon l'invention, ledit modèle de correspondance entre positions numériques et positions réelles correspond à une matrice triaxiale suivant trois axes d'un système métrique, ladite étape de détermination de ladite position numérique dudit même élément dans ladite matrice électromagnétique *Ifmoy* étant réalisée selon un axe, modélisant la position dudit élément en profondeur dudit échantillon, en fonction de ladite matrice électromagnétique *Ifmoy* à la distance de mise au point moyenne dudit échantillon.

Ce mode de réalisation permet ainsi de déterminer la profondeur de l'élément dans l'échantillon en utilisant les reconstructions numériques de la focalisation. En effet, le maximum de focalisation sur un élément de l'échantillon correspond à une position précise en profondeur dans l'échantillon qu'il est possible d'estimer numériquement.

Selon un mode de réalisation, les déplacements prédéterminés sont réalisés dans deux directions opposées pour chaque axe dudit système métrique.

Ce mode de réalisation vise à réaliser deux déplacements de sens opposés par axe de déplacement de sorte à tenir compte du comportement dissymétrique du déplacement, mis en œuvre par exemple par le jeu d'une platine avec des moteurs pas-à-pas. De préférence, ce mode de réalisation est également mis en œuvre avec des platines qui comprennent des organes de correction de type «correction de jeu » ou « *backlash correction* », dont la fonction est de corriger ce type d'erreur. Par exemple, selon un premier axe et en partant de la position centrale, les moyens de déplacement effectuent un premier déplacement de 15 micromètres et un second déplacement de -15 micromètres. Il s'ensuit également que le déplacement total est de 30 micromètres et les variations de la position de l'élément sont également plus importantes. Ainsi, la détermination du rapport entre les déplacements numériques et réels est plus précise.

Selon un mode de réalisation, la détermination dudit modèle de correspondance entre positions numériques et positions réelles est réalisée par l'intermédiaire d'une moyenne des variations des positions numérique de plusieurs éléments présents dans ladite image holographique. Ce mode de réalisation permet également d'améliorer la précision du rapport entre les déplacements numériques et réels.

Selon un mode de réalisation, ledit système optique ayant un axe optique et réalisant la conjugaison entre un plan de mise au point et un plan focal, l'étape d'acquisition de ladite image holographique est réalisée alors que ledit système optique est placé par rapport audit échantillon de sorte que lesdits éléments dudit échantillon ne sont pas dans ledit plan de mis au point.

Selon un mode de réalisation, avant les étapes d'acquisition d'une image holographique pour obtenir lesdites positions numériques dudit élément, le procédé comporte une étape d'acquisition d'une image d'arrière-plan, les images holographiques obtenues lors desdits étapes d'acquisition étant normalisées par ladite image d'arrière-plan.

Ce mode de réalisation permet de supprimer les impuretés présentes sur le système optique ou le capteur afin d'améliorer la netteté de l'image acquise pour les différents déplacements prédéterminés dudit échantillon relativement audit système optique.

Selon un mode de réalisation, ledit élément correspond à un repère dudit échantillon. Par exemple, un marqueur peut être positionné sur ou dans l'échantillon avec des caractéristiques bien distinctes du milieu de sorte à faciliter la détection de la position numérique du marqueur dans la première matrice électromagnétique.

Selon un mode de réalisation, ledit élément correspond à une particule présente dans ledit échantillon. Ce mode de réalisation permet de réutiliser les particules présentes dans l'échantillon pour effectuer la calibration. Ainsi, il n'est pas nécessaire de positionner un marqueur dans l'échantillon.

Selon un mode de réalisation, ladite étape consistant à déterminer ladite position numérique de ladite particule dans ladite matrice électromagnétique *Ifmoy* est réalisée en recherchant le centre de ladite particule.

Certaines particules s'étendent sur plusieurs pixels de l'image et sur plusieurs unités de profondeur de l'échantillon, ce mode de réalisation vise à rechercher un centre de chaque particule afin de déterminer la position de la particule. Ce faisant, ce mode de réalisation améliore la précision de la micro-spectroscopie Raman car cette méthode est d'autant plus précise que la focalisation est réalisée sur le centre d'une particule.

Selon un mode de réalisation, ledit modèle de correspondance entre positions numériques et positions réelles est réalisé en considérant plusieurs particules présentes dans ledit échantillon, les positions numériques des particules entre deux images consécutives étant déterminées en recherchant les positions des particules desdits deux images, en calculant les vecteurs reliant les particules deux à deux et on déterminant un vecteur de déplacement probable correspondant au vecteur le plus récurrent.

Bien que l'utilisation des particules de l'échantillon permette de supprimer l'étape de fixation d'un marqueur, il peut être complexe de reconnaître le déplacement d'une particule spécifique entre deux images contenant plusieurs particules. Pour remédier à ce problème, ce mode de réalisation propose ce calculer les vecteurs de déplacement de plusieurs particules afin de déterminer le déplacement global des particules à l'aide du vecteur le plus récurrent.

Pour déterminer le vecteur le plus récurrent, chaque vecteur peut être préalablement approximé de sorte à masquer les imprécisions dans la détection de l'ensemble des vecteurs. De même, pour simplifier la corrélation des vecteurs, il peut être considéré uniquement une partie des deux images.

DESCRIPTION SOMMAIRE DES FIGURES

La manière de réaliser l'invention ainsi que les avantages qui en découlent, ressortiront bien du mode de réalisation qui suit, donné à titre indicatif mais non limitatif, à l'appui des figures annexées dans lesquelles les figures 1 à 4 représentent :

- figure 1 : une représentation schématique en coupe d'un dispositif d'analyse d'une particule présente dans un échantillon selon un mode de réalisation de l'invention ;
- figure 2: une représentation schématique d'un organigramme de fonctionnement des moyens de traitement de la figure 1 selon un premier mode de réalisation ;
- figure 3: une représentation schématique d'un organigramme de fonctionnement du module de détermination d'une image focalisée moyenne de la figure 2 ; et

- figure 4 : une représentation des images obtenues pour cinq déplacements de l'échantillon du dispositif d'analyse de la figure 1.

## DESCRIPTION DETAILLEE DE L'INVENTION

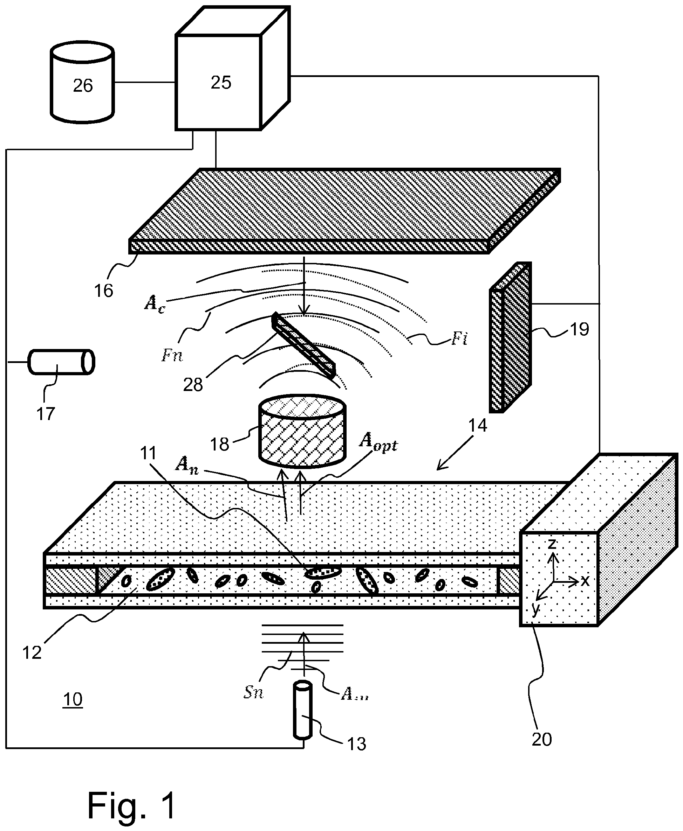

La figure 1 illustre un dispositif d'analyse **10** d'une particule **11** présente dans un échantillon **12**. L'échantillon **12** est disposé entre une source lumineuse **13**, spatialement et temporellement cohérente (e.g. un laser) ou pseudo-cohérente (e.g. une diode électroluminescente, une diode laser), d'axe d'illumination $A_{ill}$, et un capteur numérique **16** sensible dans la gamme spectrale de la source lumineuse **13**. De préférence, la source lumineuse **13** comporte une faible largeur spectrale, par exemple inférieure à 200nm, inférieure à 100nm ou encore inférieure à 25 nm. Ces propriétés spectrales confèrent à la source lumineuse **13** une cohérence temporelle permettant la reconstruction holographique dans une gamme compatible avec les incertitudes de positionnement rencontrées de l'ordre de la centaine de nanomètre. La géométrie de la source lumineuse **13**, sa taille apparente et sa position dans l'espace, sont préférentiellement choisies en fonction des propriétés optiques du système (grandissement, taille du point source...) pour que la cohérence spatiale de cette source lumineuse **13** ne soit pas limitante par rapport à la cohérence temporelle définie par les propriétés de largeur spectrale proposée ci-dessus.

Dans ce qui suit, il est fait référence à la longueur d'onde d'émission centrale de la source lumineuse **13**, par exemple dans le domaine visible. La source lumineuse **13** émet un signal cohérent **Sn** orienté sur une première face de l'échantillon, par exemple acheminé par un guide d'onde tel qu'une fibre optique.

L'échantillon **12** consiste en un liquide tel que de l'eau, une solution tampon, un milieu de culture ou un milieu réactif (comprenant ou non un antibiotique), dans lequel se trouvent les particules **11** à observer.

En variante, l'échantillon **12** peut se présenter sous la forme d'un milieu solide, de préférence translucide, tel qu'une gélose agar, dans et sur lequel se trouvent les particules **11**. L'échantillon **12** peut également être un milieu gazeux. Les particules **11** peuvent se situer à l'intérieur du milieu ou bien à la surface de l'échantillon **12**.

Les particules **11** peuvent être des microorganismes tels que des bactéries, des champignons ou des levures. Il peut également s'agir de cellules, organismes multicellulaires, ou toute autre particule de type particule polluante, poussière. La taille des particules **11** observées varie entre 500 nanomètres et plusieurs centaines de micromètres, voire quelques millimètres.

L'échantillon **12** est contenu dans une chambre d'analyse, délimitée verticalement par une lame inférieure et une lame supérieure, de préférence des lames planes et parallèles, par exemple des lames de microscope conventionnelles. La chambre d'analyse est délimitée latéralement par un adhésif ou par tout autre matériau étanche. En variante, l'échantillon peut être déposé sur une lame de microscope ou support équivalent, sans être emprisonné dans une chambre d'analyse.

Les lames inférieure et supérieure sont transparentes à la longueur d'onde de la source lumineuse **13**, l'échantillon et la chambre laissant passer par exemple plus de 50% la longueur d'onde de la source lumineuse **13** sous incidence normale sur la lame inférieure.

De préférence, les particules **11** sont disposées dans l'échantillon **12** au niveau de la lame supérieure. La face inférieure de la lame supérieure comprend à cet effet des ligands permettant d'accrocher les particules, par exemple des polycations (e.g. poly-L-lysine) ou des anticorps dans le cadre de microorganismes. Ceci permet de contenir les particules **11** dans une épaisseur égale à, ou proche de, la profondeur de champ du système optique, à savoir dans une épaisseur inférieure à 1mm (e.g. lentille), et de préférence inférieure à 100 micromètres (e.g. objectif de microscope). Les particules **11** peuvent néanmoins se déplacer dans l'échantillon **12**.

De préférence, le dispositif comprend un système optique **18** constitué, par exemple, d'un objectif de microscope, e.g. un objectif à focal fixe, et d'une lentille de tube, disposé dans l'air. Le système optique **18** est optionnellement équipé d'un filtre pouvant être situé devant l'objectif ou entre l'objectif et la lentille de tube. Le système optique **18** est caractérisé par son axe optique $A_{opt}$, son plan objet, également dénommé plan de mise au point, à une distance de l'objectif, et son plan d'image, conjugué du plan d'objet par le système optique.

En d'autres termes, à un objet situé dans le plan d'objet, correspond une image nette de cet objet dans le plan image, également appelé plan focal. Les propriétés optiques du système optique **18** sont fixes (e.g. optique à focale fixe). Les plans objet et image sont idéalement orthogonaux à l'axe optique, et supposés comme tels pour les modélisations mathématiques décrites ci-dessous.

Le capteur d'image **16** est plan et est situé, en regard d'une face supérieure **14** de l'échantillon **12**, dans le plan focal ou à proximité de ce dernier aux erreurs d'assemblage et de construction près. Le capteur d'image **16**, par exemple un capteur CCD ou CMOS plan, comprend un réseau bidimensionnel périodique de sites élémentaires sensibles, et une électronique de proximité qui règle le temps d'exposition et la remise à zéro des sites, d'une manière connue en soi. Le signal de sortie d'un site élémentaire est fonction de la quantité de rayonnement de la gamme spectrale incident sur ledit site pendant la durée d'exposition. Ce signal est ensuite converti, par exemple par l'électronique de proximité, en point image, ou « pixel », d'une image numérique.

Le capteur d'image **16** produit ainsi une image numérique sous forme d'une matrice à **C** colonnes et **L** lignes. Chaque pixel de cette matrice, de coordonnées (c, *l*) dans la matrice, correspond d'une manière connue en soi à une position de coordonnées cartésiennes *(x(c, l), y(c, l)))* dans le plan focal du système optique **18,** par exemple la position du centre du site sensible élémentaire de forme rectangulaire. Le capteur d'image **16** comporte également un axe $A_c$ normal à la surface plane du capteur d'image **16** pour lequel l'image *Ih* issue du capteur d'image **16** présente un minimum de déformation par rapport à la scène observée.

Préférentiellement, le pas et le facteur de remplissage du réseau périodique sont choisis pour respecter le critère Shannon-Nyquist vis-à-vis de la taille des particules observées, de manière à définir au moins deux pixels par particule. Ainsi, le capteur d'image **16** acquiert une image en transmission de l'échantillon **12** dans la gamme spectrale de la source lumineuse **13.**

L'image *Ih* acquise par le capteur d'image **16** comprend des informations holographiques dans la mesure où elle résulte de l'interférence entre une onde diffractée *Fi* par les particules **11** et une onde de référence *Fn* ayant traversée l'échantillon **12** sans avoir interagi avec lui.

Comme décrit plus haut, dans le cadre d'un capteur CMOS ou CCD, l'image numérique *Ih* acquise et mémorisée dans les moyens de traitement numériques **25** est une image en intensité, l'information de phase étant donc codée en intensité, avec l'image numérique *Ih* selon la relation :

$$
Ih = \begin{pmatrix}
ih(1,1) & \dots & ih(c,1) & \dots & ih(C,1) \\
\vdots & \ddots & \vdots & \dots & \vdots \\
ih(1,l) & \dots & ih(c,l) & \dots & ih(C,l) \\
\vdots & \ddots & \vdots & \ddots & \vdots \\
ih(1,L) & \dots & ih(c,L) & \dots & ih(C,L)
\end{pmatrix}
$$

Alternativement, il est possible de diviser le signal cohérent **Sn** issu de la source lumineuse **13** en deux composantes, par exemple au moyen d'une lame semi-transparente. La première composante sert alors d'onde de référence et la seconde composante est diffractée par l'échantillon **12,** l'image dans le plan image du système optique **18** résultant de l'interférence entre l'onde diffractée *Fi* et l'onde de référence *Fn.*

L'image en intensité *Ih* acquise par le capteur d'image **16** n'est pas focalisée sur une particule **11** à observer et l'obtention d'une information focalisée sur une particule **11** est obtenue numériquement par des moyens de traitement numériques **25** connectés au capteur d'image **16** pour recevoir les images *Ih* acquises par ce dernier.

Par « défocalisée », on entend ici qu'il n'y a pas d'intersection entre le plan de mise au point et la particule **11** - objet de l'observation. Les moyens de traitement numériques **25** peuvent correspondre à un ordinateur, un microcontrôleur, une tablette tactile ou un téléphone intelligent, ou de manière générale tout système informatique à base de processeur capable de recevoir des données, traiter ces données en mettant en œuvre des instructions informatiques stockées dans une mémoire informatique, et de délivrer et/ou stocker dans une mémoire informatique le résultat du traitement.

Les moyens de traitement numériques **25** peuvent être connectés de manière filaire ou non filaire avec le capteur d'image **16** ou au moyen d'une communication sans fil. Les moyens de traitement numériques **25** peuvent être associés à un écran pour l'affichage des résultats intermédiaires ou finaux du procédé de l'invention. En variante, les moyens de traitement numériques **25** peuvent correspondre à un ensemble de plusieurs systèmes informatiques avec un système dédié au capteur d'image **16** et d'autres systèmes spécifiques pour les autres éléments reliés aux moyens de traitement numériques **25.**

La source lumineuse **13,** le capteur d'image **16** et les moyens de traitement numériques **25** forment un dispositif d'analyse d'au moins une particule **11** dans l'échantillon **12** de sorte à obtenir la position d'au moins une particule d'intérêt **11** dans l'échantillon **12.**

Pour réaliser l'analyse d'une particule d'intérêt **11** spécifique, présente dans l'échantillon **12,** le dispositif intègre également une platine **20** de déplacement de l'échantillon **12.** La platine **20** assure un déplacement tri-axial d'axes **X, Y, Z** à base de moteurs pas-à-pas commandés par une unité de commande, par exemple les moyens de traitement numériques **25,** en fonction d'une consigne de position ou de déplacement. La platine **20** permet de déplacer l'échantillon **12** relativement au système optique **18** selon un axe **Z** idéalement parallèle à l'axe optique $A_{opt}$ et de déplacer l'échantillon **12** selon deux autres axes **X, Y** idéalement définissant un plan orthogonal à l'axe optique $A_{opt}.$ En variante, la platine **20** peut être configurée pour déplacer le système optique **18** et/ou la source lumineuse **13** alors que l'échantillon **12** est fixe.

Ainsi, les déplacements selon les axes **X, Y** permettent de régler la position de l'axe optique $A_{opt}$ sur l'échantillon **12,** et donc la position d'un laser Raman sur l'échantillon **12.** En outre, les déplacements selon l'axe **Z** permettent de régler la distance entre l'échantillon **12** et le système optique **18,** et par conséquent la position du plan focal (ou de manière équivalente la position du volume confocal) par rapport à l'échantillon **12.**

Dans l'idéal, l'axe optique $A_{opt}$, l'axe mécanique **Z** de déplacement de la platine **20,** l'axe d'illumination $A_{ill}$, l'axe $A_c$ normal à la surface plane du capteur **16** et l'axe $A_n$ normal à la surface plane de l'échantillon **12** devraient être alignés mais les erreurs de construction et la présence de jeu peuvent rendre ces alignements imparfaits lorsqu'une grande précision est requise. On peut ainsi définir un système d'axes réel, différent du système **X, Y, Z,** lié au capteurs d'images comme $X_n$, $Y_n$ et $Z_n$ où $X_n$ et $Y_n$ sont compris dans la surface plane du capteur **16** et $Z_n$ colinéaire à l'axe $A_c$.

Les calculs de reconstruction numérique du front d'onde décrits ci-après ou des consignes de déplacement, sont basés sur une telle hypothèse. En réalité, il existe des défauts d'alignement que l'invention corrige au moyen de la calibration du modèle de correspondance.

L'ensemble d'analyse par spectroscopie Raman comporte, par exemple, une source lumineuse monochromatique **17** et un spectromètre **19.** La source lumineuse **17** correspond préférentiellement à un laser.

Le faisceau issu du laser est orienté dans le système optique **18,** et donc sur l'échantillon **12,** par exemple par un ensemble de miroirs et de filtres **28.** Le système optique **18** permet de focaliser la source lumineuse **17** sur une position particulière de l'échantillon, la position de la focalisation étant réglable en déplaçant l'échantillon **12** par rapport au système optique **18** à l'aide de la platine **20.** D'une manière connue en soi, la platine **20** reçoit une consigne de position pour l'échantillon **12,** ce qui permet de positionner le tir laser sur ce dernier, consigne par exemple communiquée aux moyens de traitement numériques **25,** notamment la position d'une particule détectée comme décrit ci-dessous. En particulier, les moyens de traitement numériques **25** déterminent une position numérique de la particule en fonction d'un traitement d'image et convertit cette position numérique en une position réelle de la particule dans l'échantillon (e.g. dans un repère fixe lié au bâti du dispositif ou à la platine d'une manière connue en soi), position réelle communiquée au moyen de déplacement en tant que consigne de position. Pour ce faire, les moyens de traitement numériques **25** utilisent un modèle de correspondance entre une position numérique, notée **Pn,** et une positions réelles notée **Pr.** La calibration de ce modèle de correspondance sera décrite plus loin.

La diffusion Raman du faisceau laser dans l'échantillon **12** est captée par le spectromètre **19** en passant également par l'ensemble de miroirs et de filtres **28.** Le laser et le spectromètre **19** sont connectés aux moyens de traitement numériques **25** qui commandent le tir laser et réceptionnent l'image de la diffusion. Bien entendu, les différents éléments peuvent être agencés différemment sans changer l'invention.

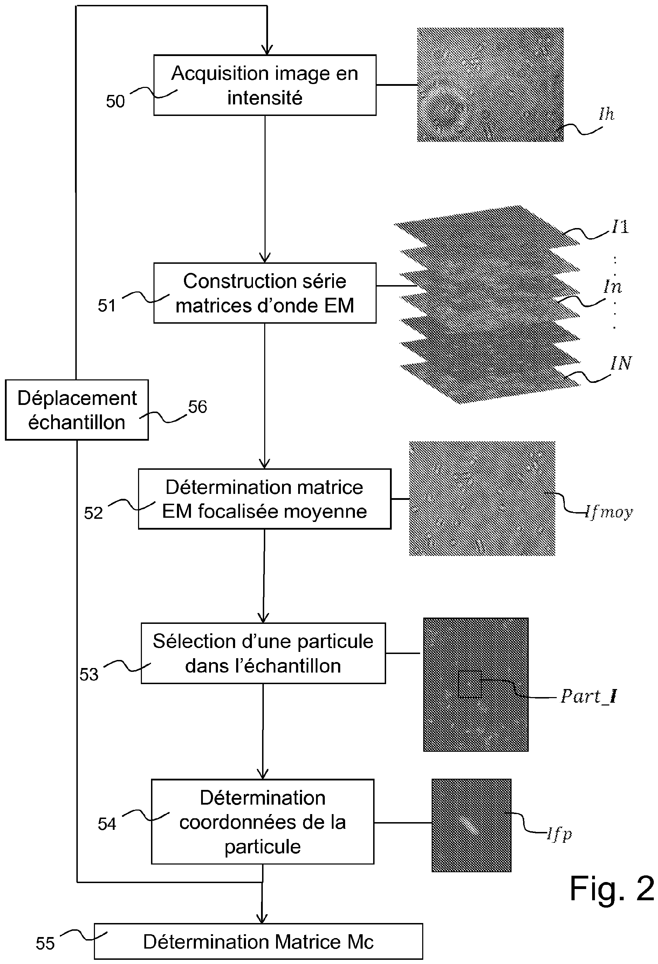

La position du système optique **18** et les déplacements de l'échantillon **12** ont pour but de focaliser le faisceau laser sur une particule d'intérêt **11** présente dans l'échantillon **12.** Pour ce faire, la Figure 2 illustre les modules de traitement informatique **51-56,** intégrés dans les moyens de traitement numériques **25** sous forme d'instructions informatiques mises en œuvre par l'ordinateur, suite à l'acquisition **50** de l'image en intensité *Ih* par le capteur d'image **16.** Un premier module **51** construit une série de matrices complexes *I1*, ..., *In*, ..., *IN,* nommées «matrices électromagnétiques » **EM,** modélisant à partir de l'image *Ih* le front d'onde lumineux propagé le long de l'axe optique pour une pluralité d'écarts par rapport au plan de mise au point du système optique **18,** et en particulier des écarts positionnés dans l'échantillon.

Une méthode de calcul de fronts d'onde par propagation numérique est expliqué dans l'article de Sang-Hyuk Lee et al. Intitulé « Holographie microscopy of holographically trapped three-dimensional structures » publié dans Optics Express, Vol. 15 ; N°4, 19 Février 2017, pp. 1505-1512.

Plus précisément, si l'on note $h_z(r)$ la fonction de propagation de Rayleigh-Sommerfeld, soit :

$$h_z(r) = -\frac{1}{2\pi}\frac{\partial}{\partial z}\frac{e^{ikR}}{R}$$

où :

- z est la hauteur dite de « défocalisation », autrement dit l'écart par rapport au plan de mise au point,
- r = $(|r|, \partial)$ est la position en coordonnées polaires dans le plan d'image, de coordonnée radiale |r| et de coordonnées angulaire,
- $R^2 = |r|^2 + z^2$ , et
- $k = 2\pi n/\lambda$ est un nombre d'onde relatif au milieu de propagation d'indice de réfraction n à la longueur d'onde $\lambda$ de la source lumineuse.

A partir de cette relation, l'onde électromagnétique $a(r, z)$, d'amplitude |a(r,z)| et de phase $\varphi(r, z)$, dans le plan d'ordonnée z peut être exprimée sous la forme :

$$a(r,z) = |a(r,z)|\exp(i\varphi(r,z))$$

$$a(r,z) = \frac{1}{4\pi^2} \int_{-\infty}^{+\infty} B(q) H_{-z}(q) \exp(iqr)\, d^2q$$

où

- $b(r)$ est intensité mesurée, i.e. l'image *Ih* (l'intensité de l'onde de référence est ici supposée constante),
- $B(q)$ est la transformée de Fourier de *b(r)*,
- $H_{-z}(q)$ est la transformée de Fourier de $h_{-z}(r)$ , et
- q est la variable duale de r dans la transformée de Fourier.

Les équations ci-dessus définissent une formulation analytique de l'amplitude *a(r, z)*. Bien que ce modèle soit développé pour la propagation dans un milieu homogène (et donc sans modification du nombre d'onde, sans présence d'interface source de réflexion et/ou de déviation de l'onde, etc.), et par conséquent sans rapport avec l'échantillon **12** et la chambre (qui comprennent de nombreuses interfaces et changement d'indices par exemple), les inventeurs ont noté qu'il permet de reconstruire des informations électromagnétiques riches en rapport avec les particules observées, comme cela sera décrit-après.

Ainsi, avantageusement, les moyens de traitement numériques **25** mémorisent un seul nombre d'onde, commun pour tous les milieux enjeux, par exemple l'indice de l'air.

En variante, les moyens de traitement numériques **25** mémorisent les indices de réfraction et épaisseurs des différents milieux en jeu le long de l'axe optique et construit les matrices *I1* - *IN de* proche en proche pour tenir compte des phénomènes aux interfaces.

Pour des bactéries, le pas d'échantillonnage en z est inférieur de préférence au dixième de l'épaisseur de la bactérie, par exemple inférieure à 0,1 micromètre, et de préférence inférieure à 0,03 micromètre.

On comprend ainsi que l'on peut construire une pile de matrices électromagnétiques *I1 - IN* pour des ordonnées $z_1, z_2, ..., z_n, z_N$ le long de l'axe optique, l'origine des ordonnées (z = 0) étant prise à la position axiale de mise au point, chaque matrice *In* étant définie par une amplitude complexe *a(r, $z_n$)* selon les relations :

$$\begin{pmatrix} a(1,1)_{z_n} & ... & a(c,1)_{z_n} & ... & a(C,1)_{z_n} \\ \vdots & \ddots & \vdots & ... & \vdots \\ a(1,l)_{z_n} & ... & a(c,l)_{z_n} & ... & a(C,l)_{z_n} \\ \vdots & \ddots & \vdots & \ddots & \vdots \\ a(L,1)_{z_n} & ... & a(c,L)_{z_n} & ... & a(C,L)_{z_n} \end{pmatrix}$$

$$\forall (c,l) \in [1,C] \times [1,L] : a(c,l)_{z_n} = a\left(r\big((c,l), y(c,l)\big), z_n\right)$$

Les moyens de traitement numériques **25** calculent ensuite sur chaque matrice *In* une application surjective positive *AS* de l'espace complexe $\mathbb{C}^{C \times L}$ vers l'espace réel $\mathbb{R}^{C \times L}$ :

$$AS(In) = \begin{pmatrix} AS(a(1,1)_{z_n}) & ... & AS(a(c,1)_{z_n}) & ... & AS(a(C,1)_{z_n}) \\ \vdots & \ddots & \vdots & ... & \vdots \\ AS(a(1,l)_{z_n}) & ... & AS(a(c,l)_{z_n}) & ... & AS(a(C,l)_{z_n}) \\ \vdots & \ddots & \vdots & \ddots & \vdots \\ AS(a(L,1)_{z_n}) & ... & AS(a(c,L)_{z_n}) & ... & AS(a(C,L)_{z_n}) \end{pmatrix}$$

Par exemple, les moyens de traitement numériques 25 calculent la norme hermitienne (ou son carrée) des composantes $a(c,l)_{z_n}$, la valeur absolue ou le carré de la partie imaginaire (notée $Im(a(c,l)_{zn})$ ou de la partie réelle (notée $Re(a(c,l)_{z_n})$) des composantes $a(c,l)_{z_n}$, ou $Re^2(a(c,l)_{zn}) + Im^2(a(c,l)_{zn})$ ou $(Re^2(a(c,l)_{z_n}) + Im^2(a(c,l)_{zn}))^{1/2}$.

Sans être lié par la théorie, les matrices *AS(I1) - AS(IN)* ne représentent pas nécessairement une intensité lumineuse, mais les inventeurs ont noté leur ressemblance avec des images en intensité obtenues sous éclairage non cohérent. Notamment, les particules sont représentées, comme dans une photographie, sous leur forme de particules.

Il est ainsi possible d'appliquer tout type de traitement d'image classique (segmentation, seuillage, détection de particule sur la base de leur morphologie, etc.), et même pour un opérateur d'identifier à l'œil les particules (à la différence d'une image codant des interférences qui sont codées en intensité sous la forme de franges). Dans ce qui suit, pour alléger les notations, les matrices *AS(I1) - AS(IN)* sont notées *I1 - IN*, et la notation $a(c,l)_{z_n}$ correspondant à $AS(a(c, l)_{z_n})$.

Le procédé consiste ensuite à identifier des particules dans l'échantillon en fonction des matrices *I1 - IN,* et pour chaque particule identifiée, à déterminer une distance z de focalisation optimale, i.e. de mise au point, pour cette particule, puis à déterminer dans la matrice de la série *I1 - IN* correspondant à cette distance, un ensemble de pixels appartenant à cette particule.

Le second module **52** vise à déterminer une distance de focalisation moyenne *zfmoy* à partir de la série de matrices *I1 - IN* et à sélectionner dans cette série la matrice, notée *Ifmoy,* dont la distance **z** est égale ou la plus proche de la distance *zfmoy.* En variante, les moyens de traitement numériques **25** recalculent la matrice *Ifmoy* pour la distance *zfmoy.*

Cette distance de focalisation moyenne *zfmoy* est celle qui correspond au mieux aux conditions idéales de mise au point sur l'ensemble des particules **11** au sens d'un critère de focalisation prédéterminé. Cette distance peut être déterminée par toutes les techniques connues de traitement du signal ou du domaine de la photographie, par exemple l'autofocus. La matrice électromagnétique résultante *Ifmoy* est suffisamment « focalisée » pour des particules à différentes profondeurs puissent être détectées dans la matrice *Ifmoy.* Les particules détectées sont notamment celles comprises dans une profondeur d'échantillon égale à la profondeur de champ. Comme décrit précédemment, dans un mode de réalisation préféré, les particules sont disposées dans un volume d'épaisseur proche ou égale à cette profondeur de champ, de sorte que la totalité, ou la quasi-totalité, des particules de l'échantillon peuvent être détectées dans la matrice *Ifmoy.*

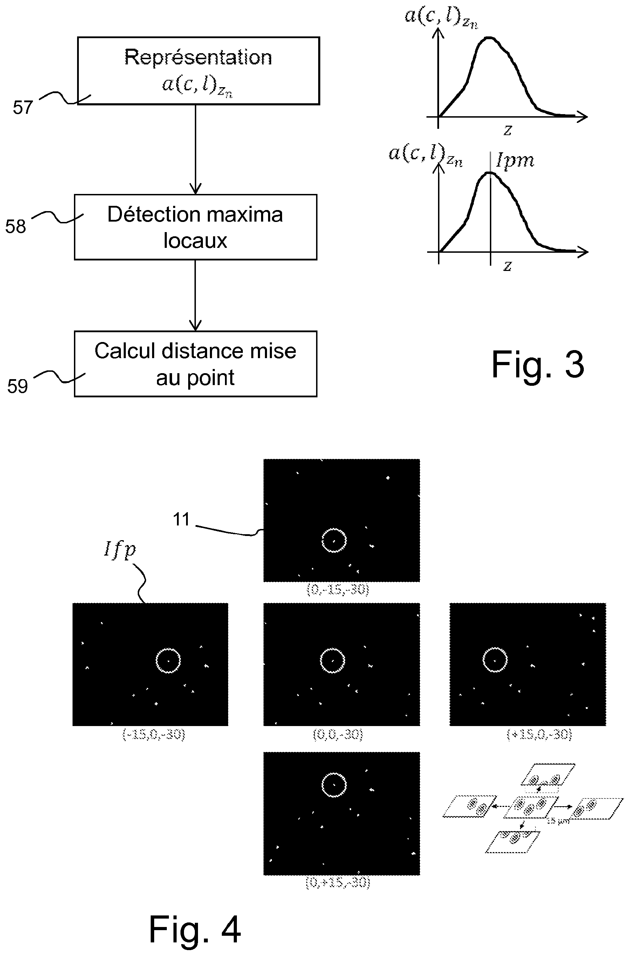

La figure 3 illustre un exemple de détermination de la distance de focalisation moyenne *zfmoy* en représentant, pour chaque coordonnée (c, *l),* la variation de $a(c,l)_{z_n}$ en fonction de la distance **z** dans la pile d'images *I1 - IN.* Lorsqu'une particule est située dans l'échantillon **12** sur l'axe, parallèle à l'axe optique du système **18**, de coordonnée (c,l) dans le plan focal, on observe une variation de $a(c,l)_{z_n}.$ Par exemple, la représentation, en **57,** des variations $a(c,l)_{z_n}$ est analogue à une fonction gaussienne en fonction de la distance **z.** Au contraire, lorsqu'aucune particule n'est présente sur cet axe, signifiant que seul le milieu de l'échantillon est présent, $a(c,l)_{z_n}$ ne varie pas ou très peu. Il est ainsi possible de détecter, en **58,** un optimum *lpm* pour chaque coordonnée (c, l) représentant la distance **z** de mise au point particulière pour cette coordonnée.

La distance de focalisation moyenne *zfmoy* peut donc être recherchée par les moyens de traitement numériques **25** en calculant, en **59,** la moyenne des distances **z** obtenues en détectant l'optimum *lpm* de chaque coordonnée (c,l). *Ifmoy* est donc la matrice de la série de matrices *I1 - IN* la plus proche de la distance **z** calculée. En variante, les moyens de traitement numériques **25** sélectionnent les **P** coordonnées, par exemple les 10000 coordonnées, présentant les plus grandes variations de leurs valeurs $a(c,l)_{zn}$ en fonction de **z** (e.g. présentant les plus grands écarts entre la valeur maximale et la valeur minimale), puis calcule la distance *zfmoy* sur ces **P** coordonnées, ce qui augmente la précision sur cette distance.

En variante, les valeurs $a(c,l)_{zn}$ de ces **P** coordonnées sont moyennées et l'optimum de la courbe moyennée en fonction de **z** est calculé, la distance **z** de l'optimum étant la distance *zfmoy.*

Bien que la distance de focalisation moyenne *zfmoy* illustre une mise au point générale de l'image, la mise au point de chaque particule **11** n'est pas optimale, notamment en raison des variations de profondeur des particules **11** entre elles. Pour améliorer la mise au point d'une particule **11** particulière, l'invention propose de déterminer une distance de focalisation optimale pour chaque particule et de déterminer une matrice focalisée spécifique à la particule. A cet effet, les moyens de traitement numériques **25** comportent un module **53** de sélection des particules et un module **54** de détermination des coordonnées des particules **11** dans l'image.

Le module **53** de sélection des particules dans la matrice *Ifmoy* peut prendre plusieurs formes de segmentation d'image de l'état de la technique, tel qu'un balayage de cette matrice jusqu'à détecter les contours d'un élément fini. En variante, les moyens de traitement numériques **25** appliquent un seuillage préalable à la matrice *Ifmoy,* la valeur seuil étant par exemple égale à $Moy(Ifmoy) + p \times E(Ifmoy),$ où $Moy(Ifmoy)$ est la moyenne des pixels de la matrice *Ifmoy,* $E(Ifmoy)$ est leur écart-type, et $p$ un entier supérieur à 1, par exemple égal à 6.

Les valeurs supérieures à ce seuil sont alors déterminées comme appartenant à des particules, et une segmentation d'image sur la matrice seuillée est mise en œuvre. A l'issue de l'identification, il est ainsi obtenu *I* ensembles de coordonnées de pixel (c,l), notés *Part_1,* ..., *Part_i,* ... *Part_I.*

Chaque ensemble, mémorisé dans une mémoire **26** associée aux moyens de traitement numériques **25,** répertorie les coordonnées dans le plan $X_n$, $Y_n$ des pixels de l'image *Ifmoy* appartenant à une même particule.

Le procédé détermine ensuite, en **54,** pour chaque ensemble de coordonnées *Part_i,* quelle distance **z** offre la meilleure focalisation pour la particule correspondante, puis détermine quelle matrice de la série *I1 - IN* correspond à cette distance (ou calcule d'une nouvelle image pour cette distance), et finalement détermine les coordonnées de la particule **11** présente dans cette image *Ifp*.

Le calcul de la distance de focalisation optimale est, par exemple, réalisé de manière analogue au calcul de la distance de focalisation moyenne. Pour chaque coordonnée (c,l) de l'ensemble ***Part_i,*** la distance correspondant à l'optimum de $a(c,l)_{z_n}$ est calculée, puis la distance de focalisation optimale est choisie égale à la moyenne des distances **z** calculées. En variante, les valeurs $a(c,l)_{z_n}$ de l'ensemble ***Part_is*** sont moyennées, et l'optimum de la courbe des valeurs moyennées en fonction de z est calculé, la distance **z** de l'optimum étant la distance de focalisation optimale choisie.

La distance focale optimale correspond à une focalisation moyenne sur la particule **11,** menant usuellement à une mise au point sur un plan médian de la particule **11**. Cette focalisation moyenne permet d'obtenir une information de profondeur, c'est-à-dire selon l'axe $Z_n$, de la particule **11** dans l'échantillon **12**. Il est ainsi possible de détecter avec précision et sans focus la position en $X_n$, $Y_n$ et $Z_n$ d'une particule **11** dans l'échantillon **12**.

Les particules **11** peuvent s'étendre sur plusieurs pixels de l'image dans le plan $X_n$, $Y_n$ et sur plusieurs unités de profondeurs selon l'axe $Z_n$. Dans ce cas, la position en $X_n$, $Y_n$ et $Z_n$ de la particule **11** dans l'échantillon **12** sera déterminée en fonction du centre de la particule **11.**

Pour focaliser un tir laser sur une particule **11** selon la spectroscopie Raman, il est classique de détecter une particule **11** dans une image et déplacer l'échantillon **12** selon les axes **X, Y** en appliquant une transformation d'échelle entre la position de la particule **11** et un déplacement réel.

L'invention propose de réaliser ce déplacement au moyen d'une matrice triaxiale **Mc,** plus précise. La matrice triaxiale **Mc** est obtenue, à l'étape **55,** en déterminant les coordonnés d'au moins une particule **11** dans plusieurs images *Ifp* en fonction de plusieurs déplacements prédéterminés **56.** La matrice triaxiale **Mc** vise à modéliser le déplacement réellement effectué par l'échantillon **12** suite à une consigne de déplacement transmise par les moyens de traitement numériques **25** aux moyens de déplacement **20** tout en intégrant les défauts optomécaniques du dispositif **10.**

Comme décrit précédemment, les différents calculs électromagnétiques et de déplacements sont réalisés en faisant l'hypothèse d'un alignement idéal des différents repères et axes, ce qui induit une différence entre les déplacements réels et les déplacements souhaités pour l'échantillon **12** par rapport à l'ensemble de détection. Une correction est mise en œuvre compenser cette erreur au travers d'une matrice de changement de base **Mc** permettant de transformer la position numérique de la particule déterminée par les moyens de traitement numériques **25** en une position réelle de cette dernière dans l'échantillon.

La matrice triaxiale **Mc** reflète la transformation entre l'espace numérique dont les valeurs *xn, yn* et **zn** sont codées en pixels sur l'image *Ifp* à l'espace métrique réel des déplacement de l'échantillon par rapport au bloc optique dont les valeurs *xs, ys* et *zs* sont classiquement exprimées en micromètres. Ainsi, la matrice triaxiale Mc de changement de base peut s'exprimer selon la relation suivante :

$$\begin{pmatrix} xn \\ yn \\ zn \end{pmatrix} = Mc \times \begin{pmatrix} xs \\ ys \\ zs \end{pmatrix}$$

$$Mc = \begin{pmatrix} Cxx & Cxy & Cxz \\ Cyx & Cyy & Cyz \\ Czx & Czy & Czz \end{pmatrix}$$

Pour déterminer les coefficients de cette matrice triaxiale **Mc,** plusieurs déplacements sont effectués et l'évolution de la position de la même particule **11** est comparée avec les consignes de déplacement transmises aux moyens de déplacement **20.**

Le nombre de déplacements à effectuer peut dépendre du système à qualifier et de ses propriétés. Au minimum un déplacement par axe de déplacement, de rotation ou de translation, est à effectuer. Il est également possible que les propriétés du système imposent de réaliser un déplacement dans chaque sens de déplacement si le système présente des asymétries de comportement selon le sens, par exemple en raison d'une erreur de jeu du système d'entrainement dans un sens donné.

En particulier, dans le cas d'un système doté de trois axes de translation et possédant une asymétrie de comportement selon chacun des axes, six déplacements sont effectués par rapport à une position centrale selon les consignes des moteurs pas à pas, par exemple:

- un premier déplacement aux coordonnées (0, 0, -30)$_s$ ;
- un deuxième déplacement aux coordonnées (+15, 0, -30)$_s$ ;
- un troisième déplacement aux coordonnées (-15, 0, -30)$_s$ ;

- un quatrième déplacement aux coordonnées $(0, +15, -30)_s$ ;
- un cinquième déplacement aux coordonnées $(0, -15, -30)_s$ ; et
- un sixième déplacement aux coordonnées $(0, 0, +30)_s$.

Dans le cas d'un système doté de trois axes de translation et muni d'un système d'entrainement ne présentant aucune asymétrie, ou une asymétrie jugée non préjudiciable, il est possible réaliser plus simplement seulement 3 déplacements, par exemple :

- un premier déplacement aux coordonnées $(0, 0, -30)_s$ ;
- un deuxième déplacement aux coordonnées $(+15, 0, -30)_s$ ; et
- un troisième déplacement aux coordonnées $(0, +15, -30)_s$.

En outre, un autre déplacement peut être effectué pour acquérir une image de fond permettent de s'assurer de la qualité des images acquises pour chaque déplacement même dans des cas complexes où de nombreuses poussières et débris viennent masque les particules d'intérêt. En particulier, un déplacement aux coordonnées aux coordonnées $(0, 0, 300)_s$ peut être réalisé pour acquérir une image de fond. En variante, l'image de fond est acquise une unique fois si le système est réputé propre ou ne pas évoluer dans le temps.

Dans la suite, il est fait référence au cas le plus complexe pour un système à 3 axes de translation au comportement asymétrique pour illustrer l'utilisation des images ainsi obtenues, à savoir six déplacements.

La figure 4 illustre cinq images *Ifp* obtenues pour les cinq premiers déplacements. L'image *Ifp* centrale illustre les particules **11** obtenues suite au premier déplacement. La particule **11** entourée est sélectionnée et ses coordonnés sont déterminées par la méthode précédemment décrite. Les coordonnés de cette particule **11** sont stockées dans la mémoire **26** et le second déplacement est effectué. L'image *Ifp* de droite illustre ce second déplacement. Le décalage de 15micromètres selon l'axe X entraine un déplacement de la particule **11** par rapport à la première image *Ifp* obtenue pour le premier déplacement. Le troisième déplacement guide l'échantillon **12** selon l'axe X jusqu'à un décalage de -15 micromètres par rapport à la première position. Ainsi, entre le deuxième et le troisième déplacement la distance réelle parcourue par l'échantillon **12** est de 30 micromètres alors que les autres axes sont invariants.

Il est donc possible de simplifier la détermination des coefficients de la matrice triaxiale **Mc** selon l'équation suivante :

$$\begin{pmatrix} xn1 \\ yn1 \\ zn1 \end{pmatrix} = \begin{pmatrix} Cxx & Cxy & Cxz \\ - & - & - \\ - & - & - \end{pmatrix} \times \begin{pmatrix} 30 \\ 0 \\ 0 \end{pmatrix}$$

La détermination des positions de la particule **11,** entourée entre ces deux déplacements, permet donc d'obtenir les coefficients *Cxx, Cyx,* et *Czx*.

De la même manière, les quatrièmes et cinquièmes déplacements permettent d'obtenir les coefficients *Cxy, Cyy* et *Czy* selon la relation simplifiée suivante :

$$\begin{pmatrix} xn2 \\ yn2 \\ zn2 \end{pmatrix} = \begin{pmatrix} - & - & - \\ Cyx & Cyy & Cyz \\ - & - & - \end{pmatrix} \times \begin{pmatrix} 0 \\ 30 \\ 0 \end{pmatrix}$$

De la même manière, les premiers et sixième déplacements permettent d'obtenir les coefficients *Cxz, Cyz* et *Czz* selon la relation simplifiée suivante :

$$\begin{pmatrix} xn3 \\ yn3 \\ zn3 \end{pmatrix} = \begin{pmatrix} - & - & - \\ - & - & - \\ Czx & Czy & Czz \end{pmatrix} \times \begin{pmatrix} 0 \\ 0 \\ 60 \end{pmatrix}$$

La résolution de ces systèmes d'équations permet donc d'obtenir les coefficients de la matrice triaxiale **Mc.** Une matrice inverse **Md** de la matrice triaxiale **Mc** modélise la transformation des pixels en déplacements. La matrice inverse **Md** s'exprime selon les coefficients suivants :

12

$$Md = \begin{pmatrix} CORRx & CORRxy & CORRxz \\ CORRyx & CORRy & CORRyz \\ CORRzx & CORRzy & CORRz \end{pmatrix}$$

Ainsi, la matrice triaxiale **Mc** ou la matrice inverse **Md** présentent des rotations et des homothéties sur tous les axes possibles. Selon un exemple non limitatif, la matrice inverse **Md** peut intégrer les coefficients suivants :

$$Md \cong \begin{pmatrix} 0.07220 & 0.00040 & -0.00129 \\ -0.00042 & 0.07234 & -0.00063 \\ 0.00034 & -0.00019 & 0.10953 \end{pmatrix}$$

Même si les valeurs typiques sont faibles, ces valeurs sont suffisantes pour altérer significativement les résultats d'une mesure par la spectroscopie Raman dont la précision recherchée est de l'ordre de 0.07 micromètre selon les axes x et y, et 0.02 micromètre selon l'axe z. Dans l'exemple ci-dessus, les coefficients sont obtenus en considérant les déplacements d'une seule particule **11,** entourée sur les images *Ifp* de la figure 4.

En variante, chaque coefficient peut être obtenu par une moyenne des variations des coordonnées de plusieurs particules **11** présentes sur deux déplacements. En outre, un seul déplacement peut être réalisé dans chaque direction pour obtenir la matrice triaxiale **Mc.**

Lorsque la matrice triaxiale **Mc** est connue, une consigne de déplacement peut être transmise par les moyens de traitement numériques **25** de sorte à déplacer l'échantillon **12** afin de focaliser le laser **17** sur une particule d'intérêt **11** dont la position a été déterminée telle que décrit ci-dessus. Ainsi, un tir laser précis peut être effectué sur la particule d'intérêt **11** alors que le spectromètre **19** capte la diffusion de la lumière issue du laser **17** de sorte à déterminer des caractéristiques, notamment physiologiques, de la particule d'intérêt **11.** En outre, cette matrice triaxiale **Mc** peut être utilisée plusieurs fois afin de déterminer des caractéristiques physiologiques de plusieurs particules d'intérêt **11.**

La matrice **Mc,** et donc la matrice **Md,** peut être mise à jour régulièrement, lors de l'introduction d'un échantillon **12** dans le dispositif d'analyse (nécessitant par exemple l'ouverture/fermeture d'un tiroir ou d'une porte pouvant induire un déplacement des différentes pièces du système), ou à chaque fois qu'une analyse d'une particule **11** est souhaitée.

Il a été décrit la détermination de la matrice de changement de base par analyse de la position d'une particule **11** dans des images. Plusieurs particules **11** peuvent être analysées pour moyenner le résultat et obtenir une détermination plus robuste de la matrice **Mc.**

De même, il a été décrit l'analyse de la position d'une particule, e.g. une bactérie dans un échantillon biologique. Tout type de repère, par exemple un défaut du milieu (e.g. une bulle, une craquelure), peut être utilisé pour procéder à cette analyse. La description fait également mention d'une platine **20** pour déplacer l'échantillon **12** à l'aide de moteurs pas-à-pas. En variante, d'autres moyens de déplacement peuvent être mis en œuvre et les déplacements peuvent être effectués manuellement par un opérateur. La matrice de correspondance indiquant alors à l'opérateur les déplacements précis à effectuer pour cibler une particule **11** dans l'échantillon **12.**

**Revendications**

1. Procédé de calibration d'un dispositif d'analyse (10) d'au moins un élément (11) présent dans un échantillon (12), ledit dispositif (10) comportant :

   - un ensemble de détection comportant une source lumineuse (13) configurée pour illuminer ledit échantillon (12), un système optique (18) configuré pour collecter un rayonnement lumineux en provenance dudit échantillon (12), et un capteur d'image plan (16) configuré de sorte à acquérir une image holographique (*Ih*) formée par l'interférence entre une onde de référence issue de ladite source lumineuse (13) et une onde diffractée par ledit échantillon (12) ; et
   - des moyens de traitement numérique (25) configurés pour détecter une position numérique (*Pn*) d'au moins un élément (11) dans ledit échantillon (12) à partir de ladite image holographique acquise *(Ih),* et pour calculer une position réelle (*Pr*) dudit élément (11) en fonction de ladite position numérique (*Pn*) et d'un modèle de correspondance entre positions numériques (*Pn*) et positions réelles (Pr);

   *caractérisé en ce* que le procédé de calibration comporte la mise en œuvre de plusieurs déplacements prédéterminés dudit échantillon (12) relativement audit système optique (18), et, pour chacun desdits déplacements, la détection d'une position numérique (*Pn*) d'un même élément (11) de sorte à déterminer (55) ledit modèle de correspondance entre positions numériques (*Pn*) et positions réelles (*Pr*) en fonction des déplacements prédéterminés et des positions numériques (*Pn*) dudit élément (11) après chaque déplacement, ladite détection comportant les étapes suivantes :

- acquisition (50) d'une image holographique (*Ih*) ;
- construction numérique (51) d'une série de matrices électromagnétiques *(I1 - IN)* modélisant, par propagation numérique de ladite image holographique acquise *(Ih),* l'onde électromagnétique dans des plans parallèles au plan du capteur d'image et compris dans ledit échantillon (12) pour une pluralité d'écarts par rapport audit plan ;
- à partir de la série de matrices électromagnétiques (*I1 - IN*), détermination (52) d'une distance de mise au point moyenne pour ledit échantillon (12) et détermination de la matrice électromagnétique correspondante *Ifmoy* ;
- identification (53) dudit même élément (11) dans la matrice électromagnétique *Ifmoy* ; et
- détermination (54) de ladite position numérique (*Pn*) dudit même élément (11) dans ladite matrice électromagnétique *Ifmoy* ;

ledit modèle de correspondance entre positions numériques (*Pn*) et positions réelles (Pr) correspondant à une matrice triaxiale (Mc) suivant trois axes d'un système métrique, ladite étape de détermination (54) de ladite position numérique (*Pn*) dudit même élément identifié (11) dans ladite matrice électromagnétique *Ifmoy* étant réalisée selon un axe (z), modélisant la position dudit élément identifié (11) en profondeur dudit échantillon (12), en fonction de ladite série de matrices électromagnétiques (I1 - IN).

2.  Procédé de calibration selon la revendication 1, *dans lequel* les déplacements prédéterminés sont réalisés dans deux directions opposées pour chaque axe dudit système métrique.

3.  Procédé de calibration selon l'une des revendications 1 ou 2, *dans lequel* la détermination (55) du modèle de correspondance entre positions numériques (*Pn*) et positions réelles (Pr) est réalisée par l'intermédiaire d'une moyenne des variations des positions numérique (*Pn*) de plusieurs éléments (11) présents dans ladite image holographique *(Ih).*

4.  Procédé de calibration selon l'une des revendications 1 à 3 *dans lequel* ledit système optique (18) dispose d'un axe optique $A_{OPT}$ et réalise la conjugaison entre un plan de mise au point et un plan focal, l'étape d'acquisition (50) de ladite image holographique (*Ih*) étant réalisée alors que ledit système optique (18) est placé par rapport audit échantillon (12) de sorte que lesdits éléments (11) dudit échantillon (12) ne sont pas dans ledit plan de mise au point.

5.  Procédé de calibration selon l'une des revendications 1 à 4, *dans lequel,* avant les étapes d'acquisition (50) d'une image holographique (*Ih*) pour obtenir lesdites positions numériques (*Pn*) dudit élément (11), le procédé comporte une étape d'acquisition d'une image d'arrière-plan, les images holographiques (*Ih*) obtenues lors desdites étapes d'acquisition (50) étant normalisées par ladite image d'arrière-plan.

6.  Procédé de calibration selon l'une des revendications 1 à 5, *dans lequel* ledit même élément (11) correspond à un repère dudit échantillon (12).

7.  Procédé de calibration selon l'une des revendications 1 à 6, *dans lequel* ledit même élément (11) correspond à une particule (11) présente dans ledit échantillon (12).

8.  Procédé de calibration selon la revendication 7, *dans lequel* l'étape consistant à déterminer (54) ladite position numérique (*Pn*) de ladite particule (11) dans ladite matrice électromagnétique *Ifmoy* est réalisée en recherchant le centre de ladite particule (11).

9.  Procédé de calibration selon la revendication 7 ou 8, *dans lequel* le modèle de correspondance entre positions numériques (*Pn*) et positions réelles (Pr) est réalisé en considérant plusieurs particules (11) présentes dans ledit échantillon (12), les positions numériques (*Pn*) des particules (11) entre deux images consécutives étant déterminées en recherchant les positions (*Pn*) des particules (11) desdites deux images, en calculant les vecteurs reliant les particules (11) deux à deux et en déterminant un vecteur de déplacement probable correspondant au vecteur le plus récurrent.

10. Dispositif d'analyse (10) d'au moins un élément (11) présent dans un échantillon (12), ledit dispositif (10) comportant :

- un ensemble de détection comportant une source lumineuse (13) configurée pour illuminer ledit échantillon (12), un système optique (18) configuré pour collecter un rayonnement lumineux en provenance dudit échantillon (12), et un capteur d'image plan (16) configuré de sorte à acquérir une image holographique (*Ih*) formée par l'interférence entre une onde de référence issue de ladite source lumineuse (13) et une onde diffractée par ledit échantillon (12) ; et

- des moyens de traitement numérique (25) configurés pour détecter une position numérique (*Pn*) d'au moins un élément (11) dans ledit échantillon (12) à partir de ladite image holographique acquise *(Ih)*, et pour calculer une position réelle (*Pr*) dudit élément (11) en fonction de ladite position numérique (*Pn*) et d'un modèle de correspondance entre positions numériques (*Pn*) et positions réelles (Pr);

- des moyens de déplacement de l'échantillon (12) relativement au système optique (18), lesdits moyens de déplacement étant pilotés par les moyens de traitement numérique ;

**caractérisé** en ce que les moyens de traitement numérique sont configurés pour commander les moyens de déplacement de manière à réaliser plusieurs déplacements prédéterminés dudit échantillon (12) relativement audit système optique (18), et, pour chacun desdits déplacements, pour détecter une position numérique (*Pn*) d'un même élément (11) de sorte à déterminer (55) ledit modèle de correspondance entre positions numériques (*Pn*) et positions réelles (*Pr*) en fonction des déplacements prédéterminés et des positions numériques (*Pn*) dudit élément (11) après chaque déplacement, la détection de la position numérique comportant les étapes suivantes :

- acquisition (50) d'une image holographique (*Ih*);
- construction numérique (51) d'une série de matrices électromagnétiques *(I1 - IN)* modélisant, par propagation numérique de ladite image holographique acquise *(Ih),* l'onde électromagnétique dans des plans parallèles au plan du capteur d'image et compris dans ledit échantillon (12) pour une pluralité d'écarts par rapport audit plan ;
- à partir de la série de matrices électromagnétiques (*I1 - IN*), détermination (52) d'une distance de mise au point moyenne pour ledit échantillon (12) et détermination de la matrice électromagnétique correspondante *Ifmoy ;*
- identification (53) dudit même élément (11) dans la matrice électromagnétique *Ifmoy* ; et
- détermination (54) de ladite position numérique (*Pn*) dudit même élément (11) dans ladite matrice électromagnétique *Ifmoy,*

ledit modèle de correspondance entre positions numériques (*Pn*) et positions réelles (*Pr*) correspondant à une matrice triaxiale (Mc) suivant trois axes d'un système métrique, ladite étape de détermination (54) de ladite position numérique (*Pn*) dudit même élément identifié (11) dans ladite matrice électromagnétique *Ifmoy* étant réalisée selon un axe (z), modélisant la position dudit élément identifié (11) en profondeur dudit échantillon (12), en fonction de ladite série de matrices électromagnétiques (I1 - IN).

**11.** Dispositif d'analyse selon la revendication 10, **dans lequel** les moyens de traitement numérique sont configurés pour mettre en œuvre un procédé selon l'une quelconque des revendications 1 à 9.

**Patentansprüche**

**1.** Verfahren zum Kalibrieren einer Vorrichtung zum Analysieren (10) mindestens eines Elementes (11), das in einer Probe (12) vorhanden ist, wobei die Vorrichtung (10) umfasst:

- eine Detektionseinheit, mit einer Lichtquelle (13), konfiguriert zur Beleuchtung dieser Probe (12), ein optisches System (18), konfiguriert zum Sammeln einer Lichtstrahlung aus dieser Probe (12), und einen Flachbildsensor (16), so konfiguriert, dass ein holographisches (*Ih*) Bild erfasst werden kann, das gebildet wird zwischen einer Referenzwelle, ausgehend von dieser Lichtquelle (13) und einer von dieser Probe (12) gebeugten Welle; und
- digitale Verarbeitungsmittel (25), dazu konfiguriert, eine digitale Position *(Pn)* mindestens eines Elementes (11) in dieser Probe (12) ausgehend von diesem erfassten holographischen Bild (*Ih*) zu erfassen und eine tatsächliche Position *(Pr)* dieses Elementes (11) in Abhängigkeit von dieser digitale Position *(Pn)* und einem Entsprechungsmodell zwischen digitalen Positionen *(Pn)* und tatsächlichen Positionen *(Pr)* zu berechnen;

**dadurch gekennzeichnet, dass** das Kalibrierungsverfahren die Umsetzung verschiedener vorher festgelegter Verschiebungen dieser Probe (12) relativ zu dem erwähnten optischen System (18) enthält, und für jede dieser Verschiebungen, die Erkennung einer digitalen Position *(Pn)* eines selben Elementes (11) um so dieses Entsprechungsmodell zwischen digitalen Positionen *(Pn)* und tatsächlichen Positionen *(Pr)* in Abhängigkeit von diesen vorher festgelegten Verschiebungen und der digitalen Positionen *(Pn)* dieses Elementes (11) nach jeder Verschiebung zu bestimmen (55), wobei diese Erkennung die folgenden Schritte enthält:

- Erfassung (50) eines holographischen Bildes (*Ih*) ;
- digitaler Aufbau (51) einer Reihe elektromagnetischer Matrizen (*I*1 - *IN*) zur Modellierung, durch digitale Verbreitung dieses erfassten holographischen Bildes *(Ih),* der elektromagnetische Welle in Ebenen, parallel zur Ebene des Bildsensors und in der erwähnten Probe (12) enthalten, für eine Vielzahl von Abständen bezogen auf diese Ebene;
- ausgehend von der Reihe elektromagnetischer Matrizen (*I*1 - *IN*), Bestimmung (52) eines Abstandes zur durchschnittlichen Entwicklung für diese Probe (12) und Bestimmung der entsprechenden elektromagnetische Matrix *Ifmoy;*
- Identifikation (53) dieses selben Elementes (11) in der elektromagnetischen Matrix *Ifmoy,* und
- Bestimmung (54) der erwähnten digitalen Position *(Pn)* dieses selben Elementes (11) in dieser elektromagnetischen Matrix ***Ifmoy,***

dieses Entsprechungsmodell zwischen digitalen Positionen *(Pn)* und tatsächlichen Positionen *(Pr)* entspricht dabei einer dreiachsigen Matrix (Mc), nach drei Achsen eines metrischen Systems,

dieser Schritt der Bestimmung (54) dieser digitalen Position *(Pn)* dieses selben identifizierten Elementes (11) in dieser elektromagnetischen Matrix *Ifmoy* wird dabei entlang einer Achse (z) ausgeführt, wobei die Position dieses selben identifizierten Elementes (11) in der Tiefe dieser Probe (12) modelliert wird, in Abhängigkeit von der erwähnten Reihe elektromagnetischer Matrizen (I1 - IN).

2. Kalibrierungsverfahren nach Anspruch 1, *bei dem* die vorher festgelegten Verschiebungen in zwei entgegengesetzte Richtungen für jede Achse des erwähnten metrischen Systems ausgeführt werden.

3. Kalibrierungsverfahren nach einem der Ansprüche 1 oder 2, *bei dem* die Bestimmung (55) des Entsprechungsmodells zwischen digitalen Positionen *(Pn)* und tatsächlichen Positionen *(Pr)* ausgeführt wird mittels eines Durchschnitts der Variationen der digitalen Positionen *(Pn)* mehrerer Elemente (11), die in diesem holographischen Bild *(Ih)* vorhanden sind.

4. Kalibrierungsverfahren nach einem der Ansprüche 1 bis 3 *bei dem* dieses optische System (18) über eine optische Achse $A_{0PT}$ verfügt und die Konjugation zwischen einer Entwicklungsebene und einer Bildebene ausführt, der Schritt der Erfassung (50) dieses holographischen Bildes (*Ih*) wird dabei ausgeführt, während das erwähnte optische System (18) unter Bezug auf diese Probe (12) platziert wird, so dass diese Elemente (11) dieser Probe (12) sich nicht in dieser Entwicklungsebene befinden.

5. Kalibrierungsverfahren nach einem der Ansprüche 1 bis 4, ***bei dem,*** vor den Schritten der Erfassung (50) eines holographischen Bildes (*Ih*) zum Erhalt dieser digitalen Positionen *(Pn)* dieses Elementes (11), das Verfahren einen Schritt der Erfassung eines Hintergrundbildes beinhaltet, die bei diesem Erfassungsschritten (50) erhaltenen holographischen Bilder *(Ih)* werden durch dieses Hintergrundbild standardisiert.

6. Kalibrierungsverfahren nach einem der Ansprüche 1 bis 5, ***bei dem*** dieses selbe Element (11) einer Markierung dieser Probe (12) entspricht.

7. Kalibrierungsverfahren nach einem der Ansprüche 1 bis 6, ***bei dem*** dieses selbe Element (11) einem in dieser Probe (12) vorhandenen Teilchen (11) entspricht.

8. Kalibrierungsverfahren nach Anspruch 7, ***bei dem*** der Schritt, der in der Bestimmung (54) der erwähnten digitalen Position *(Pn)* dieses Teilchens (11) in der erwähnten elektromagnetischen Matrix *Ifmoy* besteht, ausgeführt wird, indem das Zentrum dieses Teilchens (11) gesucht wird.

9. Kalibrierungsverfahren nach Anspruch 7 oder 8, ***bei dem*** das Entsprechungsmodell zwischen digitalen Positionen *(Pn)* und tatsächlichen Positionen *(Pr)* ausgeführt wird durch Betrachtung mehrerer in dieser Probe (12) vorhandener Teilchen (11), die digitalen Positionen *(Pn)* der Teilchen (11) zwischen zwei aufeinanderfolgenden Bildern werden dabei bestimmt, indem nach den Positionen *(Pn)* der Teilchen (11) dieser beiden Bilder gesucht wird, unter Berechnung der Vektoren, die die Teilchen (11) jeweils zu zweit verbinden und durch Bestimmung eines wahrscheinlichen Verschiebungsverktors, der dem am häufigsten wiederkehrenden Vektor entspricht.

**10.** Analysevorrichtung (10) mindestens eines Elements (11), das in einer Probe (12) vorhanden ist, wobei die Vorrichtung (10) umfasst:

- eine Detektionseinheit, mit einer Lichtquelle (13), konfiguriert zur Beleuchtung dieser Probe (12), ein optisches System (18), konfiguriert zum Sammeln einer Lichtstrahlung aus dieser Probe (12), und einen Flachbildsensor (16), so konfiguriert, dass ein holographischen Bild (*Ih*) erfasst werden kann, das gebildet wird zwischen einer Referenzwelle, ausgehend von dieser Lichtquelle (13) und einer von dieser Probe (12) gebeugten Welle; und
- digitale Verarbeitungsmittel (25) dazu konfiguriert, eine digitale Position (*Pn*) mindestens eines Elementes (11) in dieser Probe (12) ausgehend von diesem erfassten holographischen Bild (*Ih*) zu erkennen und eine tatsächliche Position (*Pr*) dieses Elementes (11) in Abhängigkeit von dieser digitalen Position (*Pn*) und einem Entsprechungsmodell zwischen digitalen Positionen (*Pn*) und tatsächlichen Positionen (*Pr*) zu berechnen;
- Mittel zur Verschiebung der Probe (12) relativ zum optischen System (18), wobei diese Verschiebungsmittel von digitalen Verarbeitungsmitteln gesteuert werden;

*dadurch gekennzeichnet, dass* die Mittel zur digitalen Verarbeitung so konfiguriert sind, dass die Mittel zur Verschiebung so gesteuert werden, dass mehrere vorher festgelegte Verschiebungen dieser Probe (12) relativ zum erwähnten optischen System (18) erfolgen können, und um für jede dieser Verschiebungen eine digitale Position (*Pn*) eines selben Elementes (11) erkennen zu können, zur Bestimmung (55) dieses Entsprechungsmodells zwischen digitalen Positionen (*Pn*) und tatsächlichen Positionen (*Pr*) in Abhängigkeit von den vorher festgelegten Verschiebungen und der digitalen Positionen (*Pn*) dieses Elementes (11) nach jeder Verschiebung, die Erkennung der digitalen Position umfasst dabei die folgenden Schritte:

- Erfassung (50) eines holographischen Bildes (*Ih*);
- digitaler Aufbau (51) einer Reihe elektromagnetischer Matrizen (*I1 - IN*) zur Modellierung, durch digitale Verbreitung dieses erfassten holographischen Bildes (*Ih*) der elektromagnetischen Welle in Ebenen, die parallel sind zur Ebene des Bildsensors und in der erwähnten Probe (12) für eine Vielzahl von Abständen, bezogen auf diese Ebene, enthalten;
- ausgehend von der Reihe elektromagnetischer Matrizen (*I1 - IN*) Bestimmung (52) eines Abstandes zur durchschnittlichen Entwicklung für diese Probe (12) und Bestimmung der entsprechenden elektromagnetische Matrix *Ifmoy;*
- Identifikation (53) desselben Elementes (11) in der elektromagnetischen Matrix *Ifmoy,* und
- Bestimmung (54) der erwähnten digitalen Position (*Pn*) dieses selben Elementes (11) in dieser elektromagnetischen Matrix *Ifmoy,*

dieses Entsprechungsmodell zwischen digitalen Positionen (*P n*) und tatsächlichen Positionen (*P r*) entspricht dabei einer dreiachsigen Matrix (Mc), nach drei Achsen eines metrischen Systems, dieser Schritt der Bestimmung (54) dieser digitalen Position (*Pn*) dieses selben identifizierten Elementes (11) in dieser elektromagnetischen Matrx *Ifmoy* wird dabei entlang einer Achse (z) ausgeführt, wobei die Position dieses selben identifizierten Elementes (11) in der Tiefe dieser Probe (12) modelliert wird, in Abhängigkeit von der erwähnten Reihe elektromagnetischer Matrizen (*I1 - IN*).

**11.** Analyservorrichtung nach Anspruch 10, *bei dem* die Mittel zur digitalen Bearbeitung so konfiguriert sind, dass ein Verfahren nach einem beliebigen der Ansprüche 1 bis 9 umgesetzt wird.

**Claims**

**1.** A method of calibration of a device (10) for analyzing at least one element (11) present in a sample (12), said device (10) comprising :

- a detection assembly comprising a light source (13) configured to illuminate said sample (12), an optical system (18) configured to collect a light radiation originating from said sample (12), and a planar image sensor (16) configured to acquire a holographic image (*Ih*) formed by the interference between a reference wave originating from said light source (13) and a wave diffracted by said radiation originating from the sample (12); and
- digital processing means (25) configured to detect a digital position (*Pn*) of at least one element (11) in said sample (12) based on said acquired holographic image (*Ih*), and to calculate a real position (*Pr*) of said element (11) according to said digital position (*Pn*) and to a digital position (*Pn*) and real position (*Pr*) matching model;

wherein the calibration method comprises implementing a plurality of predetermined displacements of said sample (12) with respect to said optical system (18) and, for each of said displacements, detecting a digital position *(Pn)* of a same element (11) to determine (55) said digital position *(Pn)* and real position *(Pr)* matching model according to the predetermined displacements and to the digital positions *(Pn)* of said element (11) after each displacement, said detection comprising the steps of:

- acquiring (50) a holographic image *(Ih);*
- digitally constructing (51) a series of electromagnetic matrices *(I1 - IN)* modeling, by digital propagation of said acquired holographic image *(Ih),* the electromagnetic wave in planes parallel to the plane of the image sensor and comprised in said sample (12) for a plurality of differences with respect to said plane;
- based on the series of electromagnetic matrices *(I1 - IN)*, determining (52) an average focusing distance for said sample (12) and determining the corresponding electromagnetic matrix *(Ifmoy);*
- identifying (53) said same element (11) in the corresponding electromagnetic matrix *(Ifmoy);* and
- determining (54) said digital position *(Pn)* of said same element (11) in said electromagnetic matrix *(Ifmoy);*

said digital position *(Pn)* and real position *(Pr)* matching model corresponding to a triaxial matrix (Mc) along three axes of a metric system,
said step of determining (54) said digital position *(Pn)* of said same identified element (11) in said electromagnetic matrix *(Ifmoy)* being carried out along an axis (z), modeling the position of said identified element (11) in the depth of said sample (12), according to said series of electromagnetic matrices *(I1 - IN)*.

2. The calibration method according to claim 1, **wherein** the predetermined displacements are performed in two opposite directions for each axis of said metric system.

3. The calibration method according to any of claims 1 or 2, **wherein** the determination (55) of the digital position *(Pn)* and real position *(Pr)* matching model is performed via an average of the variations of the digital positions *(Pn)* of a plurality of elements (11) present in said holographic image *(Ih)*.

4. The calibration method according to any of claims 1 to 3, wherein said optical system (18) has an optical axis $A_{OPT}$ and performs the conjugation between a focusing plane and a focal plane, the step of acquisition (50) of said holographic image *(Ih)* being carried out while said optical system (18) is placed with respect to said sample (12) in such a way that said elements (11) of said sample (12) are not in said focusing plane.

5. The calibration method according to any of claims 1 to 4, **wherein** before the steps of acquisition (50) of a holographic image *(Ih)* to obtain said digital positions *(Pn)* of said element (11), the method comprises a step of acquisition of a background image, the holographic images *(Ih)* obtained during said acquisition steps (50) being normalized by said background image.

6. The calibration method according to any of claims 1 to 5, **wherein** said element (11) corresponds to a landmark of said sample (12).

7. The calibration method according to any of claims 1 to 6, **wherein** said element (11) corresponds to a particle (11) present in said sample (12).

8. The calibration method according to claim 7, **wherein** the step of determining (54) said digital position *(Pn)* of said particle (11) in said electromagnetic matrix *(Ifmoy)* is performed by looking for the center of said particle (11).

9. The calibration method according to claim 7 or 8, **wherein** the matching model between digital positions *(Pn)* and real positions *(Pr)* is formed by considering a plurality of particles (11) present in said sample (12), the digital positions *(Pn)* of the particles (11) between two consecutive images being determined by looking for the positions *(Pn)* of the particles (11) of said two images, by calculating the vectors coupling the particles (11) two by two and by determining a probable displacement vector corresponding to the most recurrent vector.

10. A device for analyzing (10) at least one element (11) present in sample (12), said device (10) comprising :

- a detection assembly comprising a light source (13) configured to illuminate said sample (12), an optical system (18) configured to collect the light radiation originating from said sample (12), and a planar image sensor (16) configured to acquire a holographic image *(Ih)* formed by the interference between a reference wave originating from said light source (13) and a wave diffracted by said radiation originating from the sample (12); and
- digital processing means (25) configured to detect a digital position *(Pn)* of at least one element (11) in said sample (12) based on said acquired holographic image *(Ih)* and to calculate a real position *(Pr)* of said element (11) according to said digital position *(Pn)* and to a digital position *(Pn)* and real position *(Pr)* matching model;
- means for displacing the sample (12) with respect to the optical system (18), said displacement means being driven by the digital processing means;

*wherein* the digital processing means are configured to control the displacement means to perform a plurality of predetermined displacements of said sample (12) with respect to said optical system (18) and, for each of said displacements, to detect a digital position *(Pn)* of a same element (11) to determine (55) said digital position *(Pn)* and real position *(Pr)* matching model according to the predetermined displacements and to the digital positions *(Pn)* of said element (11) after each displacement, the detection of the digital position comprising the steps of:

- acquiring (50) a holographic image *(Ih)*;
- digitally constructing (51) a series of electromagnetic matrices *(I1 - IN)* modeling, by digital propagation of said acquired holographic image *(Ih),* the electromagnetic wave in planes parallel to the plane of the image sensor and comprised in said sample (12) for a plurality of deviations with respect to said plane;
- based on the series of electromagnetic matrices *(I1 - IN)*, determining (52) an average focusing distance for said sample (12) and determining the corresponding electromagnetic matrix *(Ifmoy);*
- identifying (53) said same element (11) in the corresponding electromagnetic matrix *(Ifmoy);* and
- determining (54) said digital position *(Pn)* of said same element (11) in said electromagnetic matrix *(Ifmoy);*

said digital position *(Pn)* and real position *(Pr)* matching model corresponding to a triaxial matrix (Mc) along three axes of a metric system,
said step of determining (54) said digital position *(Pn)* of said same identified element (11) in said electromagnetic matrix *(Ifmoy)* being carried out along an axis (z), modeling the position of said identified element (11) in the depth of said sample (12), according to said series of electromagnetic matrices *(I1 - IN)*.

11. The analysis device according to claim 10, *wherein* the digital processing means are configured to implement the method according to any of claims 1 to 9.

$A_c$

$Fn$

$Fi$

16

28

19

17

18

$A_{opt}$

11

$A_n$

14

12

$z$

$x$

$y$

10

$Sn$

$A_{.u}$

13

20

Fig. 1

Fig. 2

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016075279 A

**Littérature non-brevet citée dans la description**

- **LANGEHANENBERG et al.** Automated three-dimensional tracking of living cells by digital holographie microscopy. *Journal of Biomédical Optics,* 2009, vol. 14 (1
- **WILSON et al.** 3D Localization of weak scatterers in digital holographie microscopy using Rayleigh-Sommerfeld back-propagation. *Optics Express,* 2012, vol. 20 (15

- **SANG-HYUK LEE et al.** Holographie microscopy of holographically trapped three-dimensional structures. *Optics Express,* 19 Février 2017, vol. 15 (4), 1505-1512